# FASCICULE DE BREVET EUROPEEN

(11) **EP 2 986 877 B1**
(45) Date de publication et mention de la délivrance du brevet: **08.02.2017**
(21) Numéro de dépôt: 14722270.7
(22) Date de dépôt: 14.04.2014
(51) Int. Cl.: F16K 31/528, F16K 1/22, F16K 11/052, F02M 26/00

(54) **VANNE, NOTAMMENT DE CONTROLE MOTEUR, DOTEE D'UN VOLET DE DOSAGE ET D'UN VOLET D'AIGUILLAGE**
VENTIL, INSBESONDERE MOTORSTEUERVENTIL, MIT EINEM DOSIERSCHIEBER UND EINEM ABLENKSCHIEBER
VALVE, IN PARTICULAR AN ENGINE CONTROL VALVE, EQUIPPED WITH A METERING GATE AND A DIVERTER GATE

(30) Priorité: 12.04.2013 FR 1353357
(43) Date de publication de la demande: 24.02.2016
(73) Titulaire: Valeo Systèmes De Contrôle Moteur, 95800 Cergy St Christophe (FR)
(72) Inventeur: MARTIN, Nicolas, 78600 MAISONS-LAFFITTE (FR); HODEBOURG, Grégory, F-78500 Sartrouville (FR)
(74) Mandataire: Tran, Chi-Hai
(86) Numéro de dépôt international: PCT/FR2014/050902
(87) Numéro de publication internationale: WO 2014/167264

(56) Documents cités:
- EP-A2- 2 187 032
- US-A- 5 562 085

## Description

L'invention se rapporte à une vanne, notamment à une vanne de contrôle moteur, dotée d'un volet de dosage et d'un volet d'aiguillage. Le volet de dosage est généralement apte à pivoter dans une conduite pour faire varier la section de passage des gaz, et le volet d'aiguillage est conçu pour pivoter entre une première position d'obturation d'une première voie et une deuxième position d'obturation d'une deuxième voie. Une telle vanne peut, par exemple, être placée dans la portion d'un circuit d'admission d'air d'un moteur thermique en aval d'un compresseur, le volet de dosage régulant le débit des gaz dans ledit moteur et le volet d'aiguillage étant apte à obturer, soit une voie d'accès à un refroidisseur d'air suralimenté, soit un canal de dérivation contournant ce refroidisseur. La vanne peut comprendre un volet de dosage et un volet d'aiguillage pilotés par un mécanisme d'actionnement amélioré desdits volets.

Il existe un besoin pour bénéficier d'une vanne mettant en oeuvre un volet de dosage et un volet d'aiguillage, aptes à être déplacés par un mécanisme d'actionnement commun, la vanne étant apte à être utilisée sur une portion d'un circuit d'admission d'air d'un moteur, notamment diesel, en aval d'un compresseur.

L'invention a pour objet une vanne, notamment de contrôle moteur, comprenant :
- au moins trois voies débouchant dans un espace intérieur commun,
- un volet de dosage apte à pivoter dans une première voie pour faire varier la section de passage d'un fluide dans cette dernière,
- un volet d'aiguillage apte à pivoter entre une position d'obturation d'une deuxième voie et une position d'obturation d'une troisième voie,
- un dispositif d'actionnement commun des volets,
le dispositif d'actionnement comportant au moins une roue d'actionnement mobile en rotation pour faire pivoter l'un au moins du volet d'aiguillage et du volet de dosage,
le dispositif d'actionnement présentant au moins une première configuration dans laquelle le volet de dosage est dans une position dans laquelle il n'obture pas la première voie et dans laquelle le volet d'aiguillage est dans une position intermédiaire dans laquelle il n'est ni en position d'obturation de la deuxième voie ni en position d'obturation de la troisième voie, et
le dispositif d'actionnement étant configuré pour que la rotation de la roue d'actionnement alors que le dispositif d'actionnement est dans la première configuration conduise :
- selon une première phase à un pivotement important du volet d'aiguillage alors que le volet de dosage n'est soumis qu'à un faible pivotement, et
- selon une deuxième phase ultérieure à la première phase au pivotement du volet de dosage pour modifier la section de passage du fluide dans la première voie sans que la position du volet d'aiguillage ne soit modifiée.
Au sens de la présente demande, un volet obture une voie lorsqu'il empêche du fluide de parcourir cette voie.

Dans la première configuration, le volet de dosage est en position de complète ouverture de la première voie.

Autrement dit, dans une première phase, lorsque le volet d'aiguillage pivote depuis la première configuration vers une position d'obturation, le volet de dosage n'est soumis qu'à un faible pivotement, à partir d'une position de complète ouverture de la première voie. De cette manière, le volet de dosage demeure dans une position de quasi ouverture de la première voie, lorsque le volet d'aiguillage pivote pour atteindre une position d'obturation. Cette configuration est particulièrement intéressante lorsque la vanne est par exemple placée dans la portion d'un circuit d'admission d'air d'un moteur thermique en aval d'un compresseur, le volet d'aiguillage, en se déplaçant, ne devant pas priver éventuellement le moteur thermique de gaz d'admission.

Dans une deuxième phase, la roue d'actionnement poursuit alors sa rotation dans le même sens, cette poursuite de la rotation permettant la régulation du fluide dans la première voie sans empêcher le maintien du volet d'aiguillage en position d'obturation.

La roue d'actionnement peut pivoter, pendant la deuxième phase, dans le même sens de rotation que lors de la première phase qui la précède directement.

La première configuration peut être une position de repos du volet de dosage et du volet d'aiguillage.

Le volet de dosage peut être dépourvu de segment d'étanchéité.

Le volet de dosage peut comporter un axe de rotation et le volet peut s'étendre dans un plan comportant ledit axe de rotation. Autrement dit le volet de dosage peut pivoter autour de son axe de rotation.

Le dispositif d'actionnement peut être configuré pour que la rotation de la roue d'actionnement alors que le dispositif d'actionnement est dans la première configuration, conduise au pivotement du volet de dosage dans un sens de rotation, dépendant du sens de rotation de la roue d'actionnement.

Autrement dit, en fonction du sens de rotation de la roue d'actionnement, à partir de la première configuration, le volet de dosage pivote dans le sens horaire ou trigonométrique, pour son ouverture.

Une telle vanne n'a recours qu'à une seule roue d'actionnement pour faire pivoter les deux volets.

Préférentiellement, le dispositif d'actionnement peut être configuré pour que la rotation de la roue d'actionnement alors que le dispositif d'actionnement est dans la première configuration conduise :
- dans un premier sens de rotation au pivotement du volet d'aiguillage jusqu'à la position d'obturation de la deuxième voie, et
- dans un deuxième sens de rotation au pivotement du volet d'aiguillage jusqu'à la position d'obturation de la troisième voie.

Avantageusement, le dispositif d'actionnement peut être apte à maintenir le volet d'aiguillage dans l'une ou l'autre des positions d'obturation de la deuxième ou troisième voie alors que la roue d'actionnement poursuit un mouvement de rotation unidirectionnel depuis la première configuration.

En d'autres termes, dès lors que le volet d'aiguillage arrive dans une position d'obturation de la deuxième ou troisième voie, la roue d'actionnement peut continuer le mouvement de rotation dans le même sens qu'elle avait pour amener le volet d'aiguillage dans ladite position d'obturation. La poursuite de ce mouvement de rotation n'empêche pas le maintien du volet d'aiguillage en position d'obturation.

Par exemple, en partant de la première configuration et par une rotation de la roue d'actionnement dans un premier sens de rotation, le dispositif d'actionnement peut,
- dans une première phase, permettre de simultanément faire pivoter le volet d'aiguillage jusqu'à une position d'obturation de la deuxième voie et faire pivoter d'une faible amplitude le volet de dosage dans un sens de rotation prédéterminé, et
- dans une deuxième phase ultérieure, et pour le même sens de rotation de la roue d'actionnement que dans la première phase précédente, maintenir le volet d'aiguillage dans la position d'obturation atteinte, et faire pivoter le volet de dosage dans le sens de rotation prédéterminé pour régler la section de passage du fluide dans la première voie.

Dans le même exemple, en partant de la première configuration et par une rotation de la roue d'actionnement dans un deuxième sens de rotation opposé au premier sens, le dispositif d'actionnement peut,
- dans une première phase, permettre de simultanément faire pivoter le volet d'aiguillage jusqu'à une position d'obturation de la troisième voie et faire pivoter d'une faible amplitude le volet de dosage dans un sens de rotation opposé audit sens de rotation prédéterminé, et
- dans une deuxième phase ultérieure, et pour le même sens de rotation de la roue d'actionnement que dans la première phase précédente, maintenir le volet d'aiguillage dans la position d'obturation atteinte, et faire pivoter le volet de dosage dans le même sens de rotation qu'il avait dans la première phase, à savoir un sens de rotation opposé audit sens de rotation prédéterminé, pour régler la section de passage du fluide dans la première voie.

Avantageusement, le dispositif d'actionnement peut comprendre un système d'actionnement du volet d'aiguillage, ledit système d'actionnement comprenant une pièce de guidage et une pièce d'interface, la roue d'actionnement étant rigidement couplée à la pièce de guidage et le volet d'aiguillage étant rigidement couplé à la pièce d'interface, la pièce de guidage coopérant avec la pièce d'interface pour faire pivoter le volet d'aiguillage.

Le dispositif d'actionnement peut comprendre un système d'actionnement du volet de dosage, ledit système d'actionnement comprenant un organe de guidage et une pièce d'interface, la roue d'actionnement étant reliée à l'organe de guidage de manière à faire pivoter celui-ci lors de sa rotation, et la pièce d'interface étant rigidement couplée au volet de dosage, et l'organe de guidage coopérant avec ladite pièce d'interface pour faire pivoter le volet de dosage.

Préférentiellement, l'organe de guidage du système d'actionnement du volet de dosage et la pièce de guidage du système d'actionnement du volet d'aiguillage peuvent être distincts et rigidement couplés entre eux.

En variante, l'organe de guidage du système d'actionnement du volet de dosage et la pièce de guidage du système d'actionnement du volet d'aiguillage peuvent être formés d'une seule et même pièce.

Avantageusement, la roue d'actionnement coopère avec la pièce de guidage du système d'actionnement du volet d'aiguillage par une première zone de ladite roue et la roue d'actionnement coopère avec l'organe de guidage du système d'actionnement du volet de dosage par une deuxième zone de ladite roue, différente de la première zone.

Par exemple, la première zone et la deuxième zone peuvent avoir des positions radiales différentes et/ou des positions angulaires différentes, et/ou dans le cas où la roue d'actionnement présente deux faces opposées parallèles, être positionnées sur des faces différentes de ladite roue.

Par exemple, la deuxième zone peut coopérer indirectement avec l'organe de guidage du système d'actionnement du volet de dosage, une pièce intermédiaire étant par exemple insérée entre la roue d'actionnement et ledit organe de guidage. Cette pièce intermédiaire a notamment pour effet d'écarter axialement l'organe de guidage de la roue d'actionnement.

Préférentiellement, l'organe de guidage du système d'actionnement du volet de dosage peut comprendre un pignon coopérant avec la pièce d'interface du système d'actionnement du volet de dosage.

L'organe de guidage du système d'actionnement du volet de dosage peut être une autre roue coaxiale avec la roue d'actionnement.

La pièce d'interface peut être un secteur denté.

L'effet d'un tel pignon engrenant sur la pièce d'interface est de permettre le pivotement du volet de dosage dans un sens de rotation dépendant du sens de rotation de la roue d'actionnement, en partant de sa position d'ouverture de la première voie.

L'effet d'un tel pignon engrenant sur la pièce d'interface est de créer un rapport de réduction pour avoir un dosage précis tout en permettant au volet d'aiguillage de pivoter plus rapidement.

Selon un premier exemple de réalisation, la pièce d'interface du système d'actionnement du volet d'aiguillage peut être configurée pour définir un chemin de guidage de la pièce de guidage avec laquelle elle coopère.

Un tel exemple de réalisation, est décrit en détail dans la demande Française n° 1352230 déposée le 13 mars 2013 par la Demanderesse.

Avantageusement, le chemin de guidage peut être formé par une rainure borgne ménagée dans ladite pièce d'interface, ladite pièce de guidage reposant dans la rainure borgne lorsque le volet d'aiguillage est dans la position intermédiaire.

Avantageusement, ladite pièce de guidage peut exercer, lorsqu'elle repose dans la rainure et sous l'effet d'une rotation de la roue d'actionnement, une poussée sur ladite pièce d'interface pour faire pivoter le volet d'aiguillage.

Avantageusement, le système d'actionnement du volet d'aiguillage peut comprendre une pièce de maintien de la pièce d'interface dudit système d'actionnement, ladite pièce de maintien étant rigidement couplée avec la roue d'actionnement.

Avantageusement, ladite pièce de maintien et ladite pièce d'interface peuvent comprendre des surfaces complémentaires, de sorte que la coopération entre ces surfaces complémentaires maintient en position ladite pièce d'interface lors d'un déplacement de ladite pièce de guidage, alors que le volet d'aiguillage est dans l'une ou l'autre des positions d'obturation.

Par exemple, lesdites surfaces complémentaires peuvent être des arcs de cercle sensiblement de même rayon.

La roue d'actionnement, la pièce de guidage du système d'actionnement du volet d'aiguillage, l'organe de guidage du système d'actionnement du volet de dosage et la pièce de maintien de la pièce d'interface du système d'actionnement peuvent être distincts et rigidement couplés entre eux.

En variante, la roue d'actionnement, la pièce de guidage du système d'actionnement du volet d'aiguillage, l'organe de guidage du système d'actionnement du volet de dosage et la pièce de maintien de la pièce d'interface du système d'actionnement peuvent être formés d'une seule et même pièce.

Selon un autre mode de réalisation, le chemin de guidage peut être formé par un logement de guidage ménagé dans la pièce de guidage du système d'actionnement du volet d'aiguillage, ledit logement de guidage ayant deux bords latéraux opposés contre lesquels ladite pièce de guidage vient sélectivement en contact, lorsque le volet d'aiguillage pivote jusqu'à l'une à l'autre des positions d'obturation.

Un tel exemple de réalisation, est décrit en détail dans la demande Française n° 1352229 déposée le 13 mars 2013 par la Demanderesse.

Préférentiellement, le logement de guidage peut comprendre deux segments ayant une extrémité commune.

Avantageusement, au niveau de chaque extrémité opposée à l'extrémité commune d'un segment, le bord latéral du segment le plus proche de l'autre segment peut s'étendre radialement au-delà de l'autre bord latéral dudit segment.

Avantageusement, ladite pièce de guidage peut définir en outre un chemin de maintien de ladite pièce d'interface pour maintenir le volet d'aiguillage dans l'une ou l'autre des positions d'obturation.

Préférentiellement, le chemin de maintien et le chemin de guidage peuvent communiquer par au moins un bord latéral commun.

Avantageusement, un ressort peut coopérer avec le corps de la vanne et la pièce d'interface du système d'actionnement du volet d'aiguillage, et être configuré pour sélectivement maintenir en position d'obturation le volet d'aiguillage.

Avantageusement, la vanne peut être placée dans une portion d'un circuit d'admission d'air d'un moteur thermique, par exemple un moteur diesel, notamment d'un véhicule, ladite portion étant en aval d'un compresseur et ladite portion comprenant un refroidisseur d'air suralimenté et un canal de dérivation contournant ledit refroidisseur, le volet de dosage régulant le flux gazeux dans ledit moteur et le volet d'aiguillage obturant, soit une voie d'accès audit refroidisseur, soit le canal de dérivation contournant le refroidisseur.

Une vanne de contrôle moteur comprenant les caractéristiques décrites dans le préambule de la revendication 1 est divulguée dans le document EP 2 187 032 A2.

On donne ci-après, une description détaillée, d'un mode de réalisation préféré d'une vanne selon l'invention, en se référant aux figures 1 à 7C.
- La figure 1 est une vue schématique d'un moteur thermique dans lequel peut être utilisée la vanne,
- La figure 2 est un diagramme montrant la position angulaire du volet de dosage et du volet d'aiguillage en fonction de la position angulaire de la roue d'actionnement,
- La figure 3 est une vue en perspective d'une vanne selon l'invention,
- La figure 4 est une vue en perspective d'une partie du dispositif d'actionnement d'une vanne selon l'invention,
- Les figures 5A et 5B sont des vues, respectivement de dessous et de dessus, du dispositif d'actionnement d'une vanne selon l'invention, le dispositif d'actionnement étant dans une première configuration,
- Les figures 5C, 5E et 5G sont des vues de dessous du dispositif d'actionnement d'une vanne selon l'invention, à quatre stades différents de rotation dans le même sens de la roue d'actionnement, en partant de la première configuration,
- Les figures 5D, 5F et 5H, sont des vues de dessus du dispositif d'actionnement d'une vanne selon l'invention, respectivement dans les états tels que représentés aux figures 5C, 5E et 5G,
- Les figures 6A, 6C et 6E sont des vues de dessous du dispositif d'actionnement d'une vanne selon l'invention, à quatre stades différents de rotation dans le sens opposé à celui des figures 5C à 5H, de la roue d'actionnement, en partant de la première configuration,
- Les figures 6B, 6D et 6F, sont des vues de dessus du dispositif d'actionnement d'une vanne selon l'invention, respectivement dans les états tels que représentés aux figures 6A, 6C et 6E,
- Les figures 7A à 7C sont des vues schématiques d'un deuxième mode de réalisation d'une vanne selon l'invention.

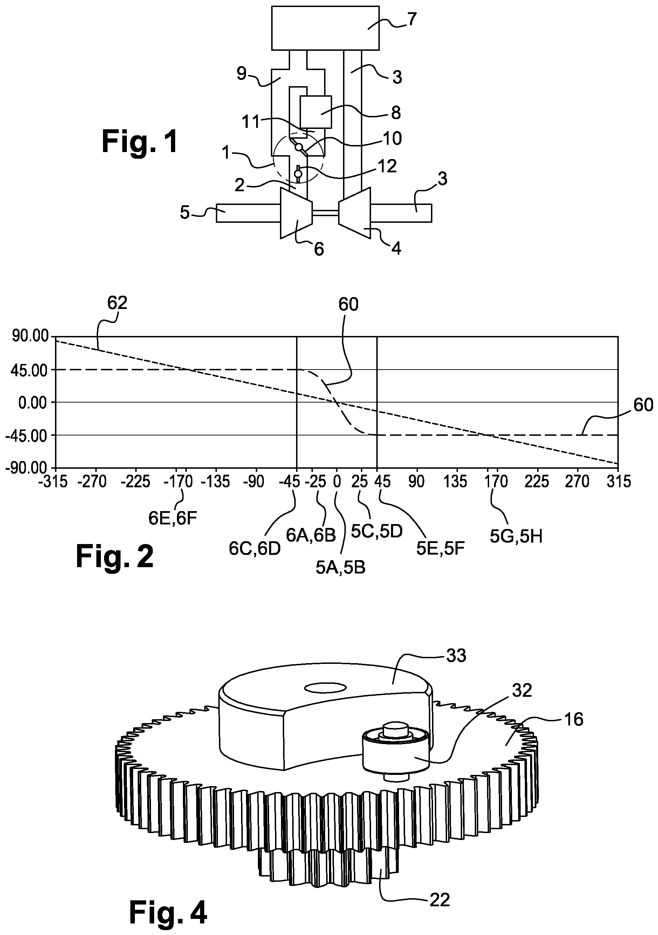

En se référant à la figure 1, une vanne 1 est une vanne placée dans une portion du circuit d'admission d'air d'un moteur thermique turbocompressé 7, qui est dans l'exemple décrit un moteur diesel, ladite portion comprenant une voie 2 amenant l'air suralimenté en sortie du compresseur 6 vers l'admission du moteur. Le moteur 7 est par ailleurs conventionnellement connecté à une ligne d'échappement 3, les gaz d'échappement étant détendus par leur passage à travers une turbine 4. Le compresseur 6 est interposé ente ladite portion du circuit d'admission et une portion dudit circuit d'admission comprenant l'entrée d'air frais.

La portion du circuit d'admission d'air comprenant la vanne 1 comprend encore un refroidisseur 8 d'air suralimenté et un canal de dérivation 9 contournant ledit refroidisseur.

La vanne 1 comprend un volet de dosage 12 apte à pivoter pour réguler le flux gazeux dans la voie 2 et donc dans le moteur thermique, et un volet d'aiguillage 10 apte à pivoter pour passer d'une position dans laquelle il obture une voie 11 d'accès au refroidisseur à une position dans laquelle il obture le canal de dérivation 9 contournant le refroidisseur, et réciproquement.

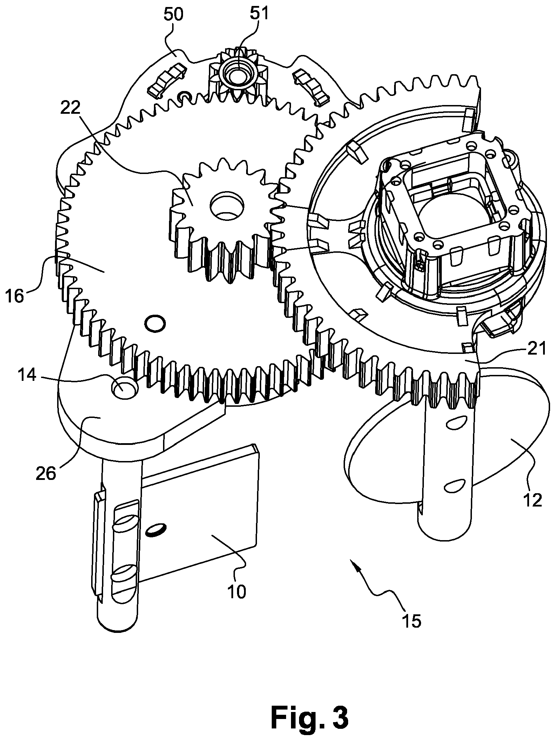

En se référant à la figure 3, le volet d'aiguillage 10 et le volet de dosage 12 sont pilotés dans leur mouvement en rotation, au moyen d'un dispositif d'actionnement commun 15. Le dispositif d'actionnement 15 commun des deux volets 10, 12 comporte une roue d'actionnement 16, apte à être mise en rotation dans les deux sens par le pignon 51 d'un moteur électrique 50, le pignon 51 engrenant sur la roue 16 d'actionnement. Le sens de rotation de ladite roue 16 est dicté par la position d'obturation que l'on souhaite affecter au volet d'aiguillage 10. Cette roue 16 pilote à la fois le pivotement du volet de dosage 12 et le pivotement du volet d'aiguillage 10 selon une cinématique synchronisée.

Ainsi, le dispositif d'actionnement 15 comprend un système d'actionnement du volet de dosage 12 et un système d'actionnement du volet d'aiguillage 10.

Le système d'actionnement du volet de dosage 12 comporte une pièce d'interface 21 qui se présente ici sous la forme d'un secteur denté et qui est rigidement couplée au volet de dosage 12. Ledit système d'actionnement comporte en outre un organe de guidage 22 du volet de dosage, qui se présente sous la forme d'un pignon 22 rigidement couplé avec la roue d'actionnement 16 et engrenant sur le secteur denté 21. Le pignon 22 partage le même axe de rotation que celui de la roue d'actionnement 16. Une rotation de la roue d'actionnement 16 peut ainsi entraîner en rotation le secteur denté 21 donc le volet de dosage 12.

Le système d'actionnement du volet d'aiguillage 10 est un mécanisme de type « croix de malte », dont le principe repose sur une mise en rotation discontinue d'un objet en forme de croix de malte au moyen d'une rotation continue d'une pièce motrice interagissant avec ledit objet. Ainsi, dans le cadre de l'invention, ledit système d'actionnement comporte un objet en forme de croix de malte qui est une pièce d'interface 26 solidarisée au volet 10.

En se référent aux figures 3, 4 et 5A, la pièce d'interface 26 comprend deux bras parallèles 27 ménageant entre eux une rainure 28 définissant un chemin de guidage, comme on le verra par la suite, et deux excroissances latérales 29, chacune desdites excroissances 29 étant placée de chaque coté de l'axe longitudinal de la rainure 28.

Un bras 27 et une excroissance 29 placés du même coté par rapport à l'axe longitudinal de la rainure 28 sont reliés l'un à l'autre par une surface en arc de cercle 30. La pièce d'interface 26 dispose d'une embase 31 alignée sur l'axe longitudinal de la rainure 28, l'axe reliant les deux excroissances 29 séparant ladite embase 31 et les deux bras 27. De cette manière, chaque bras 27 possède une extrémité implantée dans l'embase 31, et une autre extrémité qui est libre. Le volet 10 possède un axe de rotation 14 lui permettant de se déplacer entre les deux positions d'obturation des deux voies 9, 11, la pièce d'interface 26 étant rigidement fixée à une extrémité du volet 10 par l'intermédiaire de ladite embase 31. Plus précisément, la pièce d'interface 26 est fixée au volet 10 de manière à ce que l'embase 31 de la pièce d'interface 26 soit traversée par l'axe de rotation 14 du volet 10. Ainsi, la mise en rotation de la pièce d'interface 26 entraine simultanément la rotation du volet 10 autour de son axe de rotation 14 avec le même angle.

Outre la pièce d'interface 26, le système d'actionnement du volet d'aiguillage 10 comprend une pièce 32 de guidage, ici un ergot rapporté sur la roue d'actionnement 16 et sur lequel coopère dans l'exemple décrit un roulement à billes. L'ergot 32 est par exemple cylindrique et placé en périphérie et émerge du plan de la roue d'actionnement 16 selon une direction perpendiculaire.

Le système d'actionnement du volet d'aiguillage 10 comprend encore une pièce 33 de maintien qui est ici une fraction d'une autre roue coaxiale avec la roue d'actionnement 16, et solidaire de celle-ci. Cette autre roue 33 est disposée dans la zone centrale de la roue d'actionnement 16. L'autre roue 33 émerge du plan de la roue 16 selon une direction perpendiculaire, et créé ainsi une surépaisseur. La section transversale de l'autre roue 33, qui est perpendiculaire à son axe de rotation, présente un contour circulaire sur plus de la moitié de sa circonférence, ainsi qu'un évidement délimité par un tronçon incurvé reliant le contour circulaire partiel pour fermer ladite section.

En se référent à la figure 4, la roue d'actionnement 16, la pièce 33 de maintien, l'organe de guidage 22 du volet de dosage et la pièce de guidage 32 du volet d'aiguillage, constituent une pièce unique formant un ensemble cinématique rigide. La roue d'actionnement 16, la pièce 33 de maintien et l'organe de guidage 22 partagent le même axe de rotation. La pièce 33 de maintien et la pièce de guidage 32 émergent du plan appartenant à une première face de la roue 16, selon une direction perpendiculaire. L'organe de guidage 22 émerge du plan appartenant à une deuxième face de la roue 16, opposée à la première, selon une direction perpendiculaire en créant ainsi une surépaisseur. L'ensemble est réalisé sous la forme d'une pièce monobloc en plastique moulé.

La figure 2 représente :
- en ordonnée, la position angulaire du volet de dosage 12 et du volet d'aiguillage 10,
- en abscisse, la position angulaire de la roue d'actionnement 16.

La courbe 60 représente la position angulaire du volet d'aiguillage 10 et la courbe 62 représente la position angulaire du volet de dosage 12.

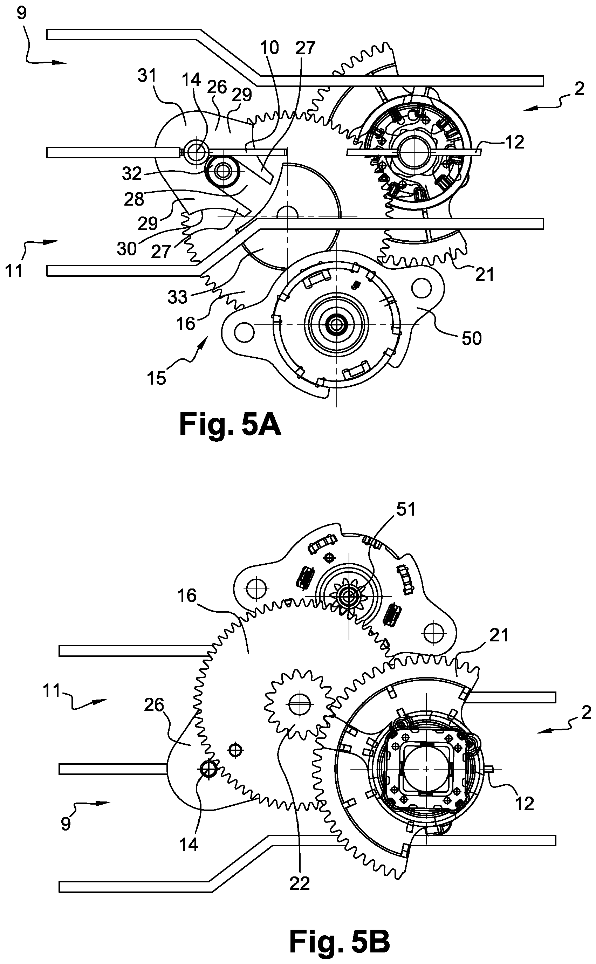

Les différentes positions angulaires du volet de dosage et du volet d'aiguillage représentées aux figures 5A à 7C sont ainsi visibles sur les courbes de la figure 2, a savoir :
- les figures 5A et 5B pour une position angulaire de 0° de la roue d'actionnement, correspondent à la première configuration du dispositif d'actionnement,

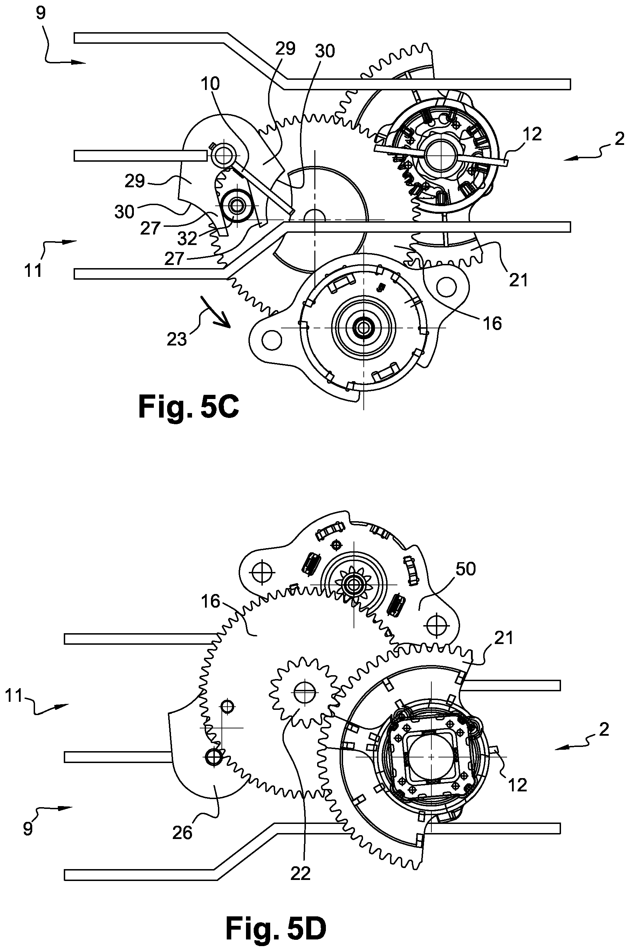

- les figures 5C et 5D pour une position angulaire de 25° de la roue d'actionnement,

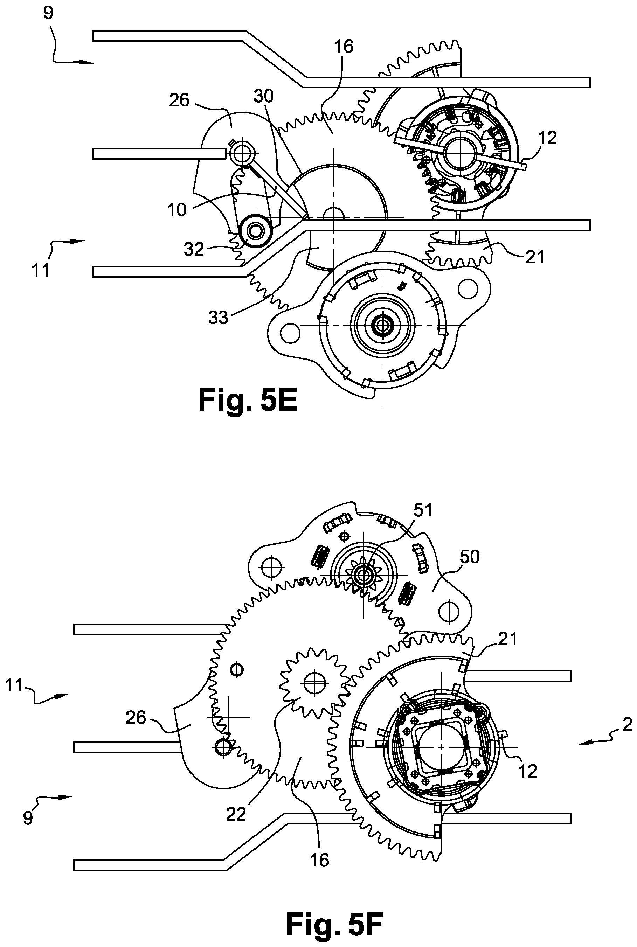

- les figures 5E et 5F pour une position angulaire de 45° de la roue d'actionnement,

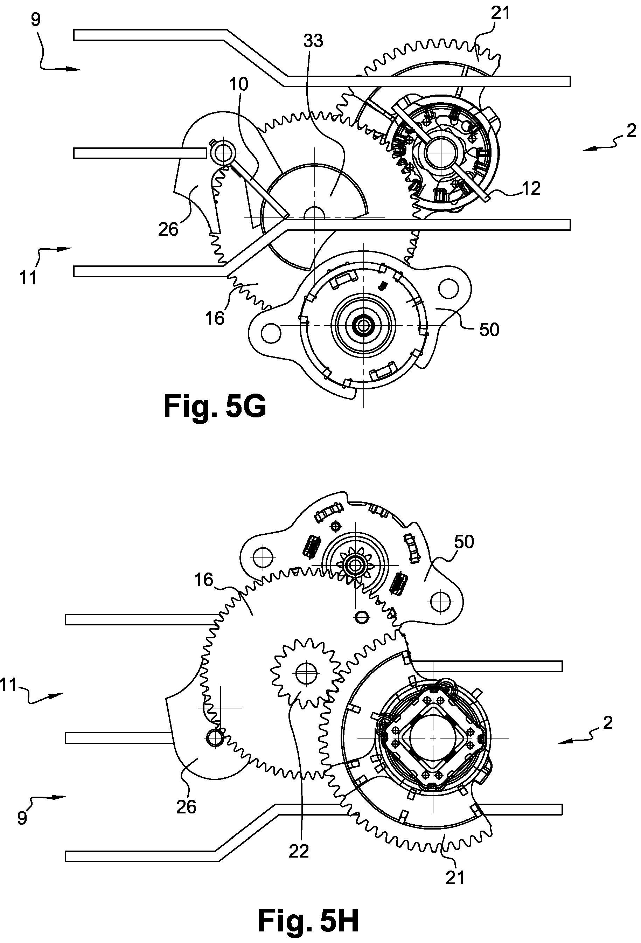

- les figures 5G et 5H pour une position angulaire de 170° de la roue d'actionnement,

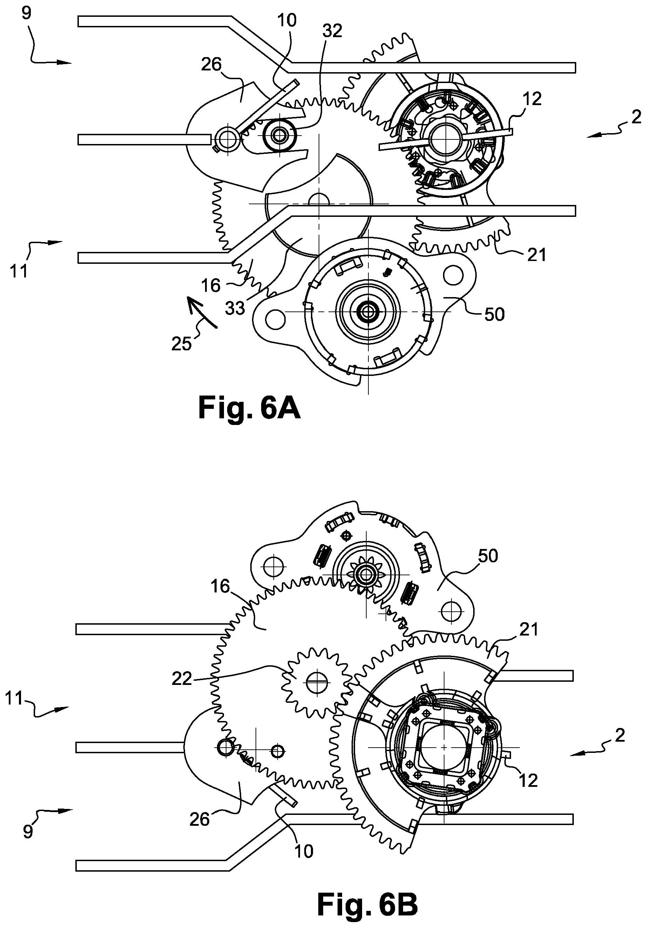

- les figures 6A et 6B, pour une position angulaire de -25° de la roue d'actionnement,

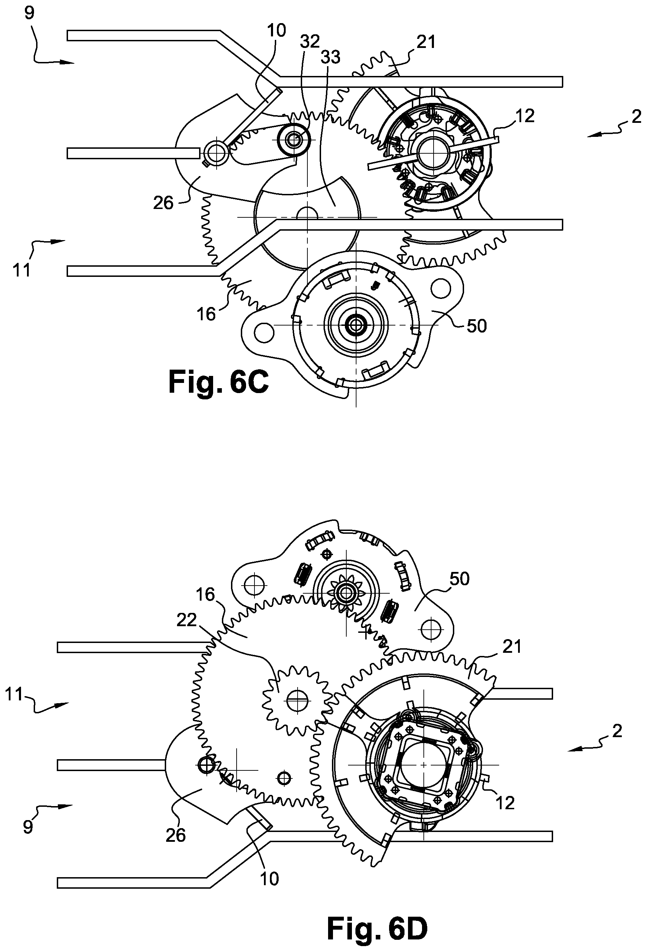

- les figures 6C et 6D, pour une position angulaire de -45° de la roue d'actionnement,
- les figures 6A et 6B, pour une position angulaire de -170° de la roue d'actionnement.

Dans la première configuration du dispositif d'actionnement 15, la roue 16 a une position angulaire de 0°, le volet de dosage 12 est en position de pleine ouverture de la voie 2 (position angulaire égale à 0°) et le volet d'aiguillage 10 est dans une position dans laquelle il n'obture ni la voie 9 ni la voie 11 (position angulaire égale à 0°).

En partant de la première configuration du dispositif d'actionnement 15, une rotation selon un premier sens de la roue d'actionnement 16 jusqu'à 45° entraine, selon une première phase, d'une part, une variation angulaire de 0° à -45° du volet d'aiguillage 10 traduisant un pivotement dans un sens pour passer d'une position d'ouverture à une position d'obturation de l'une des deux voies 9, 11, et d'autre part, à une variation angulaire de 0° à environ -12° du volet de dosage 12 pour n'entraîner qu'une fermeture minimale dudit volet 12 sans modifier significativement la section de passage de gaz dans la voie 2 d'arrivée d'air suralimenté. Autrement dit, le volet de dosage 12 demeure dans une position de quasi ouverture sur cette plage angulaire de la roue d'actionnement 16. Selon une deuxième phase, lorsque la rotation de la roue d'actionnement 16 se poursuit dans le premier sens pour atteindre 315°, le volet d'aiguillage 10 demeure figé dans la position angulaire de -45° traduisant son maintien dans la position d'obturation qu'il a atteinte, alors que la position angulaire du volet de dosage 12 varie de -12° à -83°, traduisant une fermeture progressive dudit volet 12 jusqu'à atteindre une position d'obturation de la voie 2.

Toujours à partir de la première configuration du dispositif d'actionnement 15, une rotation dans un deuxième sens, opposé au premier sens, de la roue d'actionnement 16 jusqu'à -45°, entraine selon la première phase, d'une part, une variation angulaire de 0° à 45° du volet d'aiguillage 10 traduisant un pivotement dans un sens pour passer d'une position d'ouverture à une position d'obturation de l'autre des deux voies 9, 11, et d'autre part, à une variation angulaire de 0° à une position à environ 12° du volet de dosage 12 pour n'entraîner qu'une fermeture minimale dudit volet 12 sans modifier significativement le débit de gaz dans la voie 2 d'arrivée d'air suralimenté. Selon la deuxième phase, lorsque la rotation de la roue d'actionnement 16 se poursuit dans le deuxième sens pour atteindre -315°, le volet d'aiguillage 10 demeure figé dans une position angulaire de 45° traduisant son maintien dans la position d'obturation qu'il a atteinte, alors que la position angulaire du volet de dosage 12 varie de 12° à 83°, traduisant une fermeture progressive dudit volet 12 jusqu'à atteindre une position d'obturation de la voie 2.

En se référant aux figures 5A et 5B, lorsque la roue d'actionnement 16 se retrouve dans une position de référence correspondant à la première configuration du dispositif d'actionnement 15, l'ergot 32 de la roue d'actionnement 16 est positionné au fond de la rainure 28. Les deux bras 27 de la pièce d'interface 26 occupent alors le creux laissé vacant par la pièce 33 de maintien, leur extrémité libre venant araser le tronçon incurvé de ladite pièce 33 de maintien.

En se référant aux figures 5C à 5H, la roue d'actionnement 16 tourne progressivement dans le sens matérialisé par la flèche 23 à la figure 5C, ce sens de rotation étant représentatif des vues de dessous c'est-à-dire pour les figures 5C, 5E et 5G. Les figures 5C et 5D, 5E et 5F, 5G et 5H représentent l'état des volets 10 et 12 pour des positions angulaires de la roue d'actionnement respectivement aux valeurs de 25°, 45° et 170°.

En se référant aux figures 5C et 5D, lorsque la roue 16 est mise en rotation, dans le sens matérialisé, pour la vue de dessous, par la flèche 23 à la figure 5C, à partir de sa position de référence, l'ergot 32 provoque la mise en rotation de la pièce d'interface 26 et donc du volet d'aiguillage 10 qui lui est solidaire, en exerçant une poussée sur l'un des deux bras 27 bordant la rainure 28. Le volet 10 finit par atteindre une position d'obturation de la voie 11. La roue d'actionnement provoque par ailleurs la rotation de la pièce d'interface 21 qui provoque la rotation du volet de dosage 12. Dans cette première phase de rotation de la roue d'actionnement 16 dans le sens trigonométrique à partir de sa position de référence, permet de faire pivoter simultanément le volet d'aiguillage 10, afin qu'il vienne dans une position d'obturation de la voie 11, et le volet de dosage 12 afin qu'il pivote légèrement en réduisant le débit des gaz dans la voie 2 de manière insignifiante.

En se référant aux figures 5E et 5F, une fois que le volet d'aiguillage 10 est parvenu à sa position d'obturation de la voie 11, le volet de dosage 12 atteint une position angulaire d'environ -12°. Dans cette position du volet de dosage 12, le débit des gaz circulant dans la voie 2 est quasiment inchangé par rapport au débit qui circulait lorsque le dispositif d'actionnement était dans la première configuration. En effet, le débit maximal dans la voie 2 est celui qui transite par la section totale de ladite voie, moins la section de l'axe du volet de dosage 12. Le débit dans la voie 2 est inchangé tant que la projection, dans un plan normal au flux de gaz dans la voie du volet de dosage est égale à la section dans ce plan de l'axe.

La roue d'actionnement 16 peut ensuite poursuivre, selon la deuxième phase, sa rotation dans le même sens, afin faire pivoter progressivement le volet de dosage 12 pour fermer progressivement la voie 2 et ainsi réguler le passage des gaz dans cette voie, tout en maintenant le volet d'aiguillage 10 dans sa position d'obturation, grâce à la pièce de maintien 33 de la roue d'actionnement 16, contre laquelle vient en appui le segment 30 en arc de cercle de la pièce d'interface 26.

En se référant aux figures 5G et 5H, la roue d'actionnement 16 peut poursuivre sa rotation selon la deuxième phase et toujours dans le même sens, afin de poursuivre le maintien du volet d'aiguillage 10 dans sa position d'obturation de la voie 11 et tout en poursuivant le pivotement du volet de dosage 12 pour l'obturation de la voie 2. Ainsi, la diminution du débit des gaz dans la voie 2 s'effectue par un pivotement dudit volet 12 de dosage commandé par la roue d'actionnement 16, alors que le volet d'aiguillage 10 demeure dans une position d'obturation de la voie 11. A tout moment, la roue d'actionnement 16 peut être mise en rotation dans le sens opposé pour ajuster la position du volet de dosage 12 donc augmenter le débit des gaz dans la voie 2.

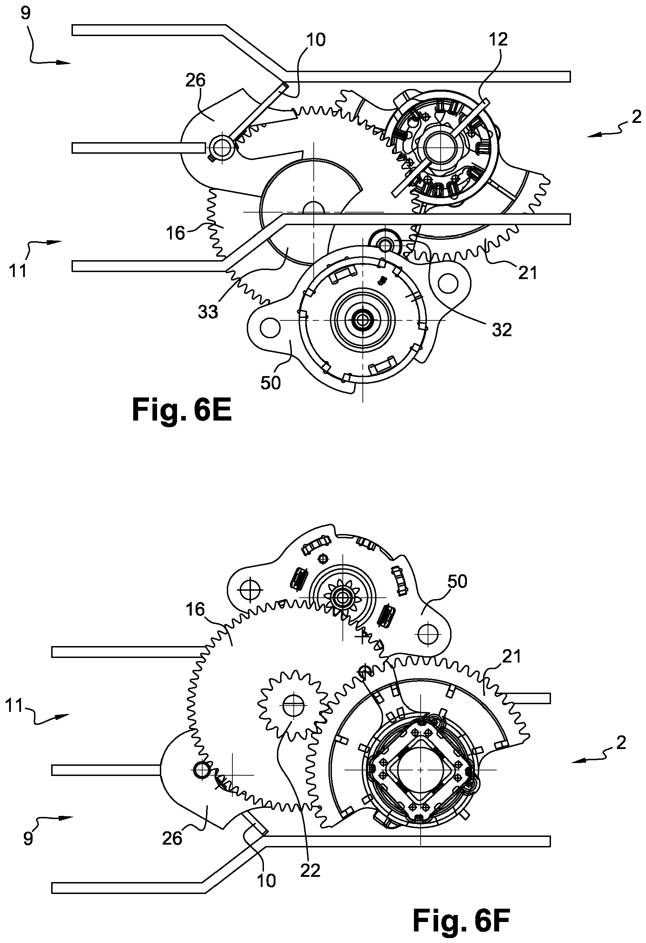

En se référant aux figures 6A à 6F, la roue d'actionnement 16 peut également être mise en rotation dans le sens opposé à partir de sa position de référence, à savoir dans le sens matérialisé par la flèche 25 de la figure 6A, ce sens de rotation étant représentatif des vues de dessous c'est-à-dire pour les figures 6A, 6C et 6E, dans le but de permettre au volet d'aiguillage 10 d'obturer la voie 9 et de permettre au volet de dosage de fermer la voie 2.

En se référant aux figures 6A et 6B, la rotation de la roue d'actionnement 16 dans le sens opposé, partant de la première configuration du dispositif d'actionnement 15, permet selon la première phase de faire pivoter simultanément le volet d'aiguillage 10, afin qu'il vienne dans une position d'obturation de la voie 9, et le volet de dosage 12 afin qu'il pivote légèrement en réduisant le débit des gaz dans la voie 2 de manière insignifiante. Dans ce cas, le volet d'aiguillage 10 pivote dans un sens qui est opposé à celui selon lequel il pivote dans l'exemple décrit en référence aux figures 5A à 5H, pour venir obturer la voie 11, tandis que le volet de dosage 12 pivote toujours dans le même sens que celui selon lequel il pivote dans l'exemple décrit en référence aux figures 5A à 5H, pour venir fermer progressivement la voie 2.

En se référant aux figures 6C et 6D, une fois que le volet d'aiguillage 10 a atteint une position d'obturation de la voie 9, la roue d'actionnement 16 poursuit selon la deuxième phase sa rotation dans le même sens, afin de continuer de faire pivoter le volet de dosage 12 ayant pour effet de progressivement fermer la voie 2, tout en maintenant le volet d'aiguillage 10 dans sa position d'obturation de la voie 9, grâce à la pièce de maintien 33 de la roue d'actionnement 16, contre laquelle vient en appui le segment 30 en arc de cercle de la pièce d'interface 26.

En se référant aux figures 6E et 6F, la rotation de la roue d'actionnement 16 peut se poursuivre, toujours dans le même sens, jusqu'à ce que le volet de dosage 12 ait atteint une position d'obturation de la voie 2. Ainsi, le réglage du degré d'ouverture du volet de dosage 12 s'effectue par un pivotement dudit volet 12 de dosage commandé par la roue d'actionnement 16, alors que le volet d'aiguillage 10 demeure dans une position d'obturation de la voie 9. A tout moment, la roue d'actionnement 16 peut être mise en rotation dans le sens opposé pour ajuster la position d'ouverture du volet de dosage 12 en augmentant alors le débit des gaz dans la voie 2.

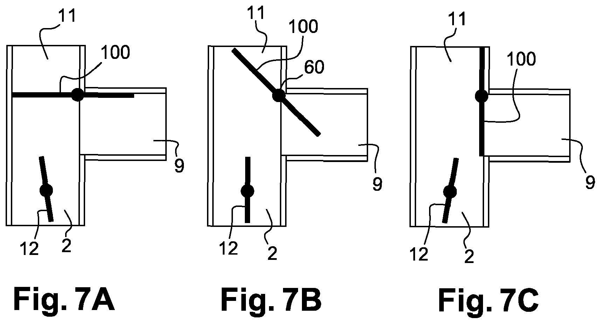

Dans l'exemple illustré aux figures 7A, 7B et 7C l'axe de rotation 60 du volet d'aiguillage 100 est placé au centre dudit volet 100, si bien qu'une partie du volet 100 située d'un coté dudit axe 60 est amenée à obturer une voie de sortie 9, 11 tandis que l'autre partie située de l'autre coté dudit axe 60 est amenée à obturer l'autre voie de sortie 9, 11. Le mécanisme général de déplacement des volets 100, 12 demeure globalement inchangé par rapport à celui décrit précédemment. Dans cet exemple, le volet d'aiguillage 100 est moins sensible au couple lié à la pression du fluide circulant dans la vanne et tendant à le faire pivoter.

## Revendications

1. Vanne (1), notamment de contrôle moteur, comprenant :
- au moins trois voies (2, 9, 11) débouchant dans un espace intérieur commun,
- un volet de dosage (12) apte à pivoter dans une première voie (2) pour faire varier la section de passage d'un fluide dans cette dernière,
- un volet d'aiguillage (10) apte à pivoter entre une position d'obturation d'une deuxième voie (9) et une position d'obturation d'une troisième voie (11),
- un dispositif d'actionnement (15) commun des volets (10, 12),
le dispositif d'actionnement (15) comportant au moins une roue d'actionnement (16) mobile en rotation pour faire pivoter l'un au moins du volet d'aiguillage (10) et du volet de dosage (12),
**caractérisée en ce que** le dispositif d'actionnement (15) présente au moins une première configuration dans laquelle le volet de dosage (12) est dans une position de complète ouverture de la première voie (2) et dans laquelle le volet d'aiguillage (10) est dans une position intermédiaire dans laquelle il n'est ni en position d'obturation de la deuxième voie (9) ni en position d'obturation de la troisième voie (11), et
le dispositif d'actionnement (15) étant configuré pour que la rotation de la roue d'actionnement (16) alors que le dispositif d'actionnement (15) est dans la première configuration conduise :
- selon une première phase à un pivotement important du volet d'aiguillage (10) alors que le volet de dosage (12) n'est soumis qu'à un faible pivotement, et
- selon une deuxième phase ultérieure à la première phase au pivotement du volet de dosage (12) pour modifier la section de passage du fluide dans la première voie (2) sans que la position du volet d'aiguillage (10) ne soit modifiée.

2. Vanne selon la revendication 1, le dispositif d'actionnement (15) étant configuré pour que la rotation de la roue d'actionnement (16) alors que le dispositif d'actionnement (15) est dans la première configuration conduise :
- dans un premier sens de rotation au pivotement du volet d'aiguillage (10) jusqu'à la position d'obturation de la deuxième voie (9), et
- dans un deuxième sens de rotation au pivotement du volet d'aiguillage (10) jusqu'à la position d'obturation de la troisième voie (11).

3. Vanne selon l'une quelconque des revendications 1 à 2, le dispositif d'actionnement (15), étant apte à maintenir le volet d'aiguillage (10) dans l'une ou l'autre des positions d'obturation de la deuxième (9) ou troisième (11) voie alors que la roue d'actionnement (16) poursuit un mouvement de rotation unidirectionnel depuis la première configuration.

4. Vanne selon l'une quelconque des revendications précédentes, le dispositif d'actionnement (15) comprenant un système d'actionnement du volet d'aiguillage, ledit système d'actionnement comprenant une pièce de guidage (32) et une pièce d'interface (26), la roue d'actionnement (16) étant rigidement couplée à la pièce de guidage (32) et le volet d'aiguillage (10) étant rigidement couplé à la pièce d'interface (26), la pièce de guidage (32) coopérant avec la pièce d'interface (26) pour faire pivoter le volet d'aiguillage (10).

5. Vanne selon l'une quelconque des revendications précédentes, le dispositif d'actionnement (15) comprenant un système d'actionnement du volet de dosage (12), ledit système d'actionnement comprenant un organe de guidage (22) et une pièce d'interface (21), la roue d'actionnement (16) étant reliée à l'organe de guidage (22) de manière à faire pivoter celui-ci lors de sa rotation, et la pièce de d'interface (21) étant rigidement couplée au volet de dosage (12), et l'organe de guidage (22) coopérant avec la pièce d'interface (21) pour faire pivoter le volet de dosage (12).

6. Vanne selon les revendications 4 et 5, l'organe de guidage (22) du système d'actionnement du volet de dosage (12) et la pièce de guidage (32) du système d'actionnement du volet d'aiguillage (10) étant distincts et rigidement couplés entre eux.

7. Vanne selon les revendications 4 et 5, la roue d'actionnement (16) coopérant avec la pièce de guidage (32) du système d'actionnement du volet d'aiguillage (10) par une première zone de ladite roue et la roue d'actionnement (16) coopérant directement ou indirectement avec l'organe de guidage (22) du système d'actionnement du volet de dosage (12) par une deuxième zone de ladite roue, différente de la première zone.

8. Vanne selon l'une quelconque des revendications 5 à 7, l'organe de guidage (22) du système d'actionnement du volet de dosage (12) comprenant un pignon coopérant avec la pièce d'interface (21) du système d'actionnement du volet de dosage (12).

9. Vanne selon l'une quelconque des revendications 4 ou 6, la pièce d'interface (26) du système d'actionnement du volet d'aiguillage (10) étant configurée pour définir un chemin de guidage de la pièce de guidage (32) avec laquelle elle coopère.

10. Vanne selon la revendication 9, le chemin de guidage étant formé par une rainure borgne (28) ménagée dans ladite pièce d'interface (26), ladite pièce de guidage (32) reposant dans la rainure borgne (28) lorsque le volet d'aiguillage (10) est dans la position intermédiaire.

11. Vanne selon la revendication 10, ladite pièce de guidage (32) exerçant, lorsqu'elle repose dans la rainure (28) et sous l'effet d'une rotation de la roue d'actionnement (16), une poussée sur ladite pièce d'interface (26) pour faire pivoter le volet d'aiguillage (10).

12. Vanne selon l'une quelconque des revendications 9 à 11, le système d'actionnement du volet d'aiguillage (10) comprenant une pièce de maintien (33) de la pièce d'interface (26) dudit système d'actionnement, ladite pièce de maintien (33) étant rigidement couplée avec la roue d'actionnement (16).

13. Vanne selon la revendication 12, ladite pièce de maintien (33) et ladite pièce d'interface (26) comprenant des surfaces complémentaires, de sorte que la coopération entre ces surfaces complémentaires maintient en position ladite pièce d'interface (26) lors d'un déplacement de ladite pièce de guidage (32), alors que le volet de d'aiguillage (10) est dans l'une ou l'autre des positions d'obturation.

14. Vanne selon l'une quelconque des revendications précédentes, le volet de dosage (12) étant dépourvu de segment d'étanchéité.

15. Vanne selon l'une quelconque des revendications précédentes, le volet de dosage (12) comportant un axe de rotation et ledit volet (12) s'étendant dans un plan comportant ledit axe de rotation.

16. Vanne de contrôle moteur selon l'une quelconque des revendications 1 à 15, étant placée dans une portion d'un circuit d'admission d'air d'un moteur thermique (7), notamment un moteur diesel, notamment d'un véhicule, ladite portion étant en aval d'un compresseur (6) et ladite portion comprenant un refroidisseur d'air suralimenté (8) et un canal de dérivation (9) contournant ledit refroidisseur, le volet de dosage (12) régulant le flux gazeux dans ledit moteur (7) et le volet d'aiguillage (10) obturant, soit une voie d'accès (11) audit refroidisseur, soit le canal de dérivation (9) contournant le refroidisseur (8).

## Patentansprüche

1. Ventil (1), insbesondere zur Motorsteuerung, umfassend:
- mindestens drei Wege (2, 9, 11), die in einen gemeinsamen Innenraum münden,
- eine Dosierklappe (12), die geeignet ist, in einen ersten Weg (2) zu schwenken, um den Durchgangsquerschnitt eines Fluids in diesem letztgenannten zu verändern,
- eine Umlenkklappe (10), die geeignet ist, zwischen einer Verschlussposition eines zweiten Weges (9) und einer Verschlussposition eines dritten Weges (11) zu schwenken,
- eine gemeinsame Betätigungsvorrichtung (15) der Klappen (10, 12),
wobei die Betätigungsvorrichtung (15) mindestens ein drehbewegliches Betätigungsrad (16) umfasst, um mindestens eine von der Umlenkklappe (10) und der Dosierklappe (12) zu schwenken,
**dadurch gekennzeichnet, dass** die Betätigungsvorrichtung (15) mindestens eine erste Ausführung aufweist, in der die Dosierklappe (12) in einer Position der vollständigen Öffnung des ersten Weges (2) ist und in der die Umlenkklappe (10) in einer Zwischenposition ist, in der sie weder in Verschlussposition des zweiten Weges (9) noch in Verschlussposition des dritten Weges (11) ist, und
wobei die Betätigungsvorrichtung (15) derart ausgeführt ist, dass die Drehung des Betätigungsrades (16), wenn sich die Betätigungsvorrichtung (15) in der ersten Ausführung befindet, zu Folgendem führt:
- gemäß einer ersten Phase einem starken Schwenken der Umlenkklappe (10), während die Dosierklappe (12) nur einem geringen Schwenken unterzogen wird, und
- gemäß einer zweiten Phase nach der ersten Phase dem Schwenken der Dosierklappe (12), um den Durchgangsquerschnitt des Fluids in dem ersten Weg (2) zu verändern, ohne dass die Position der Umlenkklappe (10) verändert wird.

2. Ventil nach Anspruch 1, wobei die Betätigungsvorrichtung (15) derart ausgeführt ist, dass die Drehung des Betätigungsrades (16), während sich die Betätigungsvorrichtung (15) in der ersten Ausführung befindet, zu Folgendem führt:
- in einer ersten Drehrichtung dem Schwenken der Umlenkklappe (10) in die Verschlussposition des zweiten Weges (9), und
- in einer zweiten Drehrichtung dem Schwenken der Umlenkklappe (10) in die Verschlussposition des dritten Weges (11).

3. Ventil nach einem der Ansprüche 1 bis 2, wobei die Betätigungsvorrichtung (15) geeignet ist, die Umlenkklappe (10) in der einen oder der anderen der Verschlusspositionen des zweiten (9) oder dritten (11) Weges zu halten, während das Betätigungsrad (16) eine unidirektionale Drehbewegung ausgehend von der ersten Ausführung weiter verfolgt.

4. Ventil nach einem der vorhergehenden Ansprüche, wobei die Betätigungsvorrichtung (15) ein Betätigungssystem der Umlenkklappe umfasst, wobei das Betätigungssystem einen Führungsabschnitt (32) und einen Schnittstellenabschnitt (26) umfasst, wobei das Betätigungsrad (16) starr an den Führungsabschnitt (32) gekoppelt ist, und die Umlenkklappe (10) starr an den Schnittstellenabschnitt (26) gekoppelt ist, wobei der Führungsabschnitt (32) mit dem Schnittstellenabschnitt (26) zusammenwirkt, um die Umlenkklappe (10) zu schwenken.

5. Ventil nach einem der vorhergehenden Ansprüche, wobei die Betätigungsvorrichtung (15) ein Betätigungssystem der Dosierklappe (12) umfasst, wobei das Betätigungssystem ein Führungselement (22) und einen Schnittstellenabschnitt (21) umfasst, wobei das Betätigungsrad (16) mit dem Führungselement (22) verbunden ist, um dieses bei seiner Drehung zu schwenken, und wobei der Schnittstellenabschnitt (21) starr mit der Dosierklappe (12) gekoppelt ist, und wobei das Führungselement (22) mit dem Schnittstellenabschnitt (21) zusammenwirkt, um die Dosierklappe (12) zu schwenken.

6. Ventil nach den Ansprüchen 4 und 5, wobei das Führungselement (22) des Betätigungssystems der Dosierklappe (12) und der Führungsabschnitt (32) des Betätigungssystems der Umlenkklappe (10) einzeln und fest miteinander gekoppelt sind.

7. Ventil nach den Ansprüchen 4 und 5, wobei das Betätigungsrad (16) mit dem Führungsabschnitt (32) des Betätigungssystems der Umlenkklappe (10) über eine erste Zone des Rades zusammenwirkt, und wobei das Betätigungsrad (16) direkt oder indirekt mit dem Führungselement (22) des Betätigungssystems der Dosierklappe (12) über eine zweite Zone des Rades, die sich von der ersten Zone unterscheidet, zusammenwirkt.

8. Ventil nach einem der Ansprüche 5-7, wobei das Führungselement (22) des Betätigungssystems der Dosierklappe (12) ein Ritzel umfasst, das mit dem Schnittstellenabschnitt (21) des Betätigungssystems der Dosierklappe (12) zusammenwirkt.

9. Ventil nach einem der Ansprüche 4 oder 6, wobei der Schnittstellenabschnitt (26) des Betätigungssystems der Umlenkklappe (10) dazu vorgesehen ist, einen Führungsweg des Führungsabschnitts (32), mit dem er zusammenwirkt, zu definieren.

10. Ventil nach Anspruch 9, wobei der Führungsweg von einer Blindnut (28) gebildet ist, die in dem Schnittstellenabschnitt (26) ausgenommen ist, wobei der Führungsabschnitt (32) in der Blindnut (28) angeordnet ist, wenn sich die Umlenkklappe (10) in der Zwischenposition befindet.

11. Ventil nach Anspruch 10, wobei der Führungsabschnitt (32), wenn er in der Nut (28) und unter der Wirkung einer Drehung des Betätigungsrades (16) angeordnet ist, einen Schub auf den Schnittstellenabschnitt (26) ausübt, um die Umlenkklappe (10) zu schwenken.

12. Ventil nach einem der Ansprüche 9 bis 11, wobei das Betätigungssystem der Umlenkklappe (10) einen Halteabschnitt (33) des Schnittstellenabschnitts (26) des Betätigungssystems umfasst, wobei der Halteabschnitt (33) starr mit dem Betätigungsrad (16) gekoppelt ist.

13. Ventil nach Anspruch 12, wobei der Halteabschnitt (33) und der Schnittstellenabschnitt (26) komplementäre Flächen umfassen, so dass das Zusammenwirken zwischen diesen komplementären Flächen den Schnittstellenabschnitt (26) bei einer Verschiebung des Führungsabschnitts (32) in Position hält, während sich die Umlenkklappe (10) in der einen oder der anderen der Verschlusspositionen befindet.

14. Ventil nach einem der vorhergehenden Ansprüche, wobei die Dosierklappe (12) kein Dichtungssegment aufweist.

15. Ventil nach einem der vorhergehenden Ansprüche, wobei die Dosierklappe (12) eine Drehachse umfasst und sich die Klappe (12) in einer die Drehachse umfassenden Ebene erstreckt.

16. Motorsteuerventil nach einem der Ansprüche 1 bis 15, das in einem Abschnitt eines Lufteinlasskreises eines Verbrennungsmotors (7), insbesondere eines Dieselmotors, insbesondere eines Fahrzeugs, platziert ist, wobei sich der Abschnitt stromabwärts eines Verdichters (6) befindet und der Abschnitt einen Ladeluftkühler (8) und einen Umlenkkanal (9), der den Kühler umgeht, umfasst, wobei die Dosierklappe (12) den Gasstrom in dem Motor (7) reguliert und die Umlenkklappe (10) entweder einen Zugangsweg (11) zum Kühler oder den Umlenkkanal (9), der den Kühler (8) umgeht, verschließt.

## Claims

1. Valve (1), notably engine control valve, comprising:
- at least three paths (2, 9, 11) opening into a common interior space,
- a metering flap (12) able to pivot in a first path (2) in order to vary the cross section for the passage of a fluid along the latter,
- a routing flap (10) able to pivot between a position in which it closes off a second path (9) and a position in which it closes off a third path (11),
- a common device (15) for actuating the flaps (10, 12),
the actuating device (15) comprising at least one actuating wheel (16) movable in rotation to cause at least one of the flaps that are the routing flap (10) and the metering flap (12) to pivot,
**characterized in that** the actuating device (15) has at least a first configuration in which the metering flap (12) is in a position of complete opening of the first path (2) and in which the routing flap (10) is in an intermediate position in which it is neither in the position for closing off the second path (9) nor in the position for closing off the third path (11), and
the actuating device (15) being configured so that rotation of the actuating wheel (16) while the actuating device (15) is in the first configuration leads:
- in a first phase, to significant pivoting of the routing flap (10) while the metering flap (12) is subjected only to a small amount of pivoting, and
- in a second phase subsequent to the first phase to the pivoting of the metering flap (12) in order to modify the cross section for the passage of fluid along the first path (2) without the position of the routing flap (10) being modified.

2. Valve according to Claim 1, the actuating device (15) being configured so that rotation of the actuating wheel (16) while the actuating device (15) is in the first configuration leads:
- in a first direction of rotation to the pivoting of the routing flap (10) into the position in which the second path (9) is shut off, and
- in a second direction of rotation to the pivoting of the routing flap (10) into the position in which the third path (11) is shut off.

3. Valve according to either one of Claims 1 and 2, the actuating device (15) being able to keep the routing flap (10) in one or other of the positions in which either the second (9) or third (11) path is shut off while the actuating wheel (16) continues a one-way rotational movement from the first configuration.

4. Valve according to any one of the preceding claims, the actuating device (15) comprising a system for actuating the routing flap, the said actuating system comprising a guide piece (32) and an interface piece (26), the actuating wheel (16) being rigidly coupled to the guide piece (32) and the routing flap (10) being rigidly coupled to the interface piece (26), the guide piece (32) collaborating with the interface piece (26) in order to cause the routing flap (10) to pivot.

5. Valve according to any one of the preceding claims, the actuating device (15) comprising an actuating system for actuating the metering flap (12), the said actuating system comprising a guide member (22) and an interface piece (21), the actuating wheel (16) being connected to the guide member (22) in such a way as to cause the latter to pivot as it rotates, and the interface piece (21) being rigidly coupled to the metering flap (12) and the guide member (22) collaborating with the interface piece (21) to cause the metering flap (12) to pivot.

6. Valve according to Claims 4 and 5, the guide member (22) of the system for actuating the metering flap (12) and the guide piece (32) of the system for actuating the routing flap (10) being distinct and rigidly coupled to one another.

7. Valve according to Claims 4 and 5, the actuating wheel (16) collaborating with the guide piece (32) of the system for actuating the routing flap (10) via a first zone of the said wheel and the actuating wheel (16) collaborating directly or indirectly with the guide member (22) of the system for actuating the metering flap (12) via a second zone of the said wheel which is different from the first zone.

8. Valve according to any one of Claims 5 to 7, the guide member (22) of the system for actuating the metering flap (12) comprising a pinion collaborating with the interface piece (21) of the system for actuating the metering flap (12).

9. Valve according to either one of Claims 4 and 6, the interface piece (26) of the system for actuating the routing flap (10) being configured to define a guide pathway for the guide piece (32) with which it collaborates.

10. Valve according to Claim 9, the guide pathway being formed by a blind groove (28) formed in the said interface piece (26), the said guide piece (32) resting in the blind groove (28) when the routing flap (10) is in the intermediate position.

11. Valve according to Claim 10, the said guide piece (32) when resting in the groove (28) and under the effect of a rotation of the actuating wheel (16) applying thrust to the said interface piece (26) in order to cause the routing flap (10) to pivot.

12. Valve according to any one of Claims 9 to 11, the system for actuating the routing flap (10) comprising a retaining piece (33) for retaining the interface piece (26) of the said actuating system, the said retaining piece (33) being rigidly coupled to the actuating wheel (16).

13. Valve according to Claim 12, the said retaining piece (33) and the said interface piece (26) comprising complementary surfaces so that collaboration between these complementary surfaces keeps the said interface piece (26) in position as the said guide piece (32) moves while the routing flap (10) is in one or other of the shutting-off positions.

14. Valve according to any one of the preceding claims, the metering flap (12) having no sealing ring.

15. Valve according to any one of the preceding claims, the metering flap (12) comprising an axis of rotation and the said flap (12) extending in a plane containing the said axis of rotation.

16. Engine control valve according to any one of Claims 1 to 15 placed in a portion of an air intake circuit of a combustion engine (7), notably a diesel engine, notably for a vehicle, the said portion being downstream of a compressor (6) and said portion comprising a charge air cooler (8) and a bypass duct (9) bypassing the said cooler, the metering flap (12) regulating the flow of gas through the said engine (7) and the routing flap (10) closing off either a path (11) providing access to the said cooler or the bypass duct (9) bypassing the cooler (8).
